# EUROPÄISCHE PATENTSCHRIFT

(11) **EP 2 497 291 B1**
(45) Veröffentlichungstag und Bekanntmachung des Hinweises auf die Patenterteilung: **16.03.2016**
(21) Anmeldenummer: 10768184.3
(22) Anmeldetag: 07.10.2010
(51) Int. Cl.: H04W 24/06, H04B 17/00, H04B 17/21, H04B 17/391, H04B 17/40

(54) **MESSVORRICHTUNG UND MESSVERFAHREN ZUR STATIONÄREN VERMESSUNG VON MOBILFUNK-RELAY-STATIONEN**
MEASURING DEVICE AND MEASURING METHOD FOR MEASURING MOBILE RADIO RELAY STATIONS IN A STATIONARY MANNER
DISPOSITIF ET PROCÉDÉ DE MESURE POUR LA MESURE STATIONNAIRE DE STATIONS-RELAIS DE TÉLÉPHONIE MOBILE

(30) Priorität: 03.11.2009 DE 102009051680
(43) Veröffentlichungstag der Anmeldung: 12.09.2012
(73) Patentinhaber: Rohde & Schwarz GmbH & Co. KG, 81671 München (DE)
(72) Erfinder: KOTTKAMP, Meik, 81379 München (DE); RÖSSLER, Andreas, Keller Texas 76244 (US)
(74) Vertreter: Körfer, Thomas
(86) Internationale Anmeldenummer: PCT/EP2010/006139
(87) Internationale Veröffentlichungsnummer: WO 2011/054428

(56) Entgegenhaltungen:
- EP-A1- 1 300 986
- EP-A2- 1 786 144
- WO-A2-01/48965
- GB-A- 2 440 190

## Beschreibung

Die Erfindung betrifft eine Messvorrichtung zur Vermessung von Umsetzer-Stationen, im Folgenden Relay-Stationen, im Labor und ein Messverfahren zur Vermessung von Relay-Stationen im Labor.
In gegenwärtigen Mobilfunksystemen sind Mobilstationen direkt über eine Funkverbindung mit Basisstationen verbunden. Jede Basisstation deckt dabei eine bestimmte Reichweite ab. Lediglich Mobilstationen, welche sich innerhalb dieser Reichweite befinden, können mit der Basisstation Kontakt aufnehmen. So zeigt das Europäische Patent EP 1 478 115 A1 ein Kommunikationssystem, bei welchem eine Mehrzahl von Mobilstationen mit jeweils einer einzelnen Basisstation in Verbindung steht. Nachteilig ist hier, dass die Reichweite der Basisstationen stark von ihrem Standort und der umgebenden Bebauung abhängt.
Zur Erhöhung der Reichweite bzw. zur Verbesserung der Empfangsbedingungen ist darüber hinaus der Einsatz von Relay-Stationen (Umsetzer-Stationen) bekannt. Dabei erfolgt die Verbindung der Mobilstation zur Basisstation nicht auf direktem Wege. Stattdessen ist die Mobilstation mit einer Relay-Station verbunden, welche wiederum mit der Basisstation verbunden ist. So zeigt die deutsche Offenlegungsschrift DE 199 55 503 A1 ein Kommunikationssystem, welches Relay-Stationen zur Erhöhung der Reichweite einsetzt.

Die Offenlegungsschrift EP 1 300 986 zeigt eine Vorrichtung, in der ein Testsignal an eine Relay-Station geführt wird, wobei das von der Relay-Station abgeleitete Signal mit dem ursprünglichen Testsignal verglichen wird.

Die britische Offenlegungsschrift GB 2 440 190 zeigt ein Testverfahren, wobei eine Kanalsimulationsvorrichtung beim Testen von einem Übertragungsgerät verwendet wird.

Die internationale Offenlegungsschrift WO 01/48965 zeigt ein Verfahren, um die Isolation von einer Relay-Station ("ground sector transceiver") durch ein Testsignal zu vermessen.

Die Offenlegungsschrift EP 1 786 144 zeigt ein Funkkommunikationssystem, worin Steurungsinformation getrennt von Nutzdaten über eine Relay-Station an eine Mobilstation gesendet werden.

Bislang sind jedoch keine Messgeräte oder Messverfahren bekannt, welche eine Vermessung der Relay-Stationen unter definierten Bedingungen erlauben.

Der Erfindung liegt die Aufgabe zu Grunde, eine Messvorrichtung und ein Messverfahren zur stationären Vermessung von Mobilfunk-Relay-Stationen zu schaffen. Die Aufgabe wird erfindungsgemäß für die Vorrichtung durch die Merkmale des unabhängigen Anspruchs 1 und für das Verfahren durch die Merkmale des unabhängigen Anspruchs 7 gelöst. Vorteilhafte Weiterbildungen sind Gegenstand der hierauf rückbezogenen Unteransprüche.

Eine erfindungsgemäße Messvorrichtung zur Vermessung von Mobilfunk-Relay-Stationen verfügt über zumindest ein erstes Messgerät und ein Empfangsgerät. Das erste Messgerät erzeugt ein erstes Signal und sendet es entweder direkt oder über zumindest ein weiteres Gerät an eine zu vermessende Relay-Station. Das Empfangsgerät empfängt von der zu vermessenden Relay-Station ein von dem ersten Signal abgeleitetes zweites Signal. Das erste Messgerät vergleicht das erste Signal und zumindest ein von dem zweiten Signal abgeleitetes Signal. So ist eine genaue Vermessung der Relay-Station möglich.

Das erste Messgerät sendet bevorzugt das erste Signal an eine erste Fading-Einrichtung. Die erste Fading-Einrichtung fügt dem ersten Signal bevorzugt ein Fading und/oder ein Rauschen und/oder eine Mehrwegeausbreitung hinzu. Sie sendet es bevorzugt als drittes Signal an die Relay-Station. Das zweite Signal ist dabei bevorzugt von dem dritten Signal abgeleitet. So wird ein sehr realitätsnaher Übertragungskanal zwischen dem ersten Messgerät und der Relay-Station simuliert. Eine besonders genaue Vermessung der Relay-Station ist so möglich.

Die erste Fading-Einrichtung arbeitet vorteilhafterweise im Basisbandbereich oder im Hochfrequenzbereich. So ist eine flexible Auswahl der einzusetzenden Messtechnik möglich. Eine Fading-Einrichtung, welche im Basisbandbereich arbeitet, ist kostengünstiger, während eine Fading-Einrichtung, welche im Hochfrequenzbereich arbeitet, eine genauere Vermessung der Relay-Station ermöglicht.

Die Relay-Station sendet vorteilhafterweise ein von dem ersten Signal abgeleitetes Signal an eine zweite Fading-Einrichtung. Die zweite Fading-Einrichtung fügt dem von dem ersten Signal abgeleiteten Signal bevorzugt Fading und/oder Rauschen und/oder eine Mehrwegeausbreitung hinzu. Sie sendet es bevorzugt als viertes Signal an das Empfangsgerät. Das vierte Signal ist dabei bevorzugt von dem zweiten Signal abgeleitet. So wird ein sehr realitätsnaher Übertragungskanal zwischen der Relay-Station und dem Empfangsgerät simuliert. Eine weitere Steigerung der Genauigkeit der Vermessung der Relay-Station ist so möglich.

Die zweite Fading-Einrichtung arbeitet vorteilhafterweise im Basisbandbereich oder im Hochfrequenzbereich. So ist eine flexible Auswahl der einzusetzenden Messtechnik möglich. Eine Fading-Einrichtung, welche im Basisbandbereich arbeitet, ist kostengünstiger, während eine Fading-Einrichtung, welche im Hochfrequenzbereich arbeitet, eine genauere Vermessung der Relay-Station ermöglicht.

Das Empfangsgerät ist dabei bevorzugt ein zweites Messgerät oder eine Mobilstation. Wird ein zweites Messgerät eingesetzt, können besonders genaue Messergebnisse erzielt werden. Wird dagegen eine Mobilstation eingesetzt, so entsprechen die Messergebnisse besonders genau zu erwartenden Ergebnissen des realen Einsatzes der Relay-Station.

Das erste Messgerät und das Empfangsgerät sind vorteilhafterweise als ein gemeinsames Gerät aufgebaut. So kann mit nur sehr geringem Verkabelungsaufwand eine Relay-Station vermessen werden.

Das erste Messgerät ermittelt beim Vergleich der Signale bevorzugt die Qualität und/oder die Geschwindigkeit der Signalübertragung über die Relay-Station. So kann die Tauglichkeit der Relay-Station direkt abgelesen werden.

Das erste Signal besteht dabei bevorzugt weitgehend aus Nutzdaten. Das erste Messgerät überträgt bevorzugt keine Steuerungsinformationen über die Relay-Station. So ist eine Vermessung der Relay-Station im reinen Nutzdatenbetrieb möglich.

Nachfolgend wird die Erfindung anhand der Zeichnung, in der ein vorteilhaftes Ausführungsbeispiel der Erfindung beispielhaft beschrieben wird dargestellt. In der Zeichnung zeigen:
- Fig. 1: ein erstes beispielhaftes Kommunikationssystem;
- Fig. 2: ein zweites beispielhaftes Kommunikationssystem;
- Fig. 3: eine beispielhafte Messvorrichtung;
- Fig. 4: eine beispielhafte Messvorrichtung;
- Fig. 5: ein Ausführungsbeispiel der erfindungsgemäßen Messvorrichtung;
- Fig. 6: ein beispielhaftes Messverfahren
- Fig. 7: ein beispielhaftes Messverfahren und
- Fig. 8: ein Ausführungsbeispiel des erfindungsgemäßen Messverfahrens.

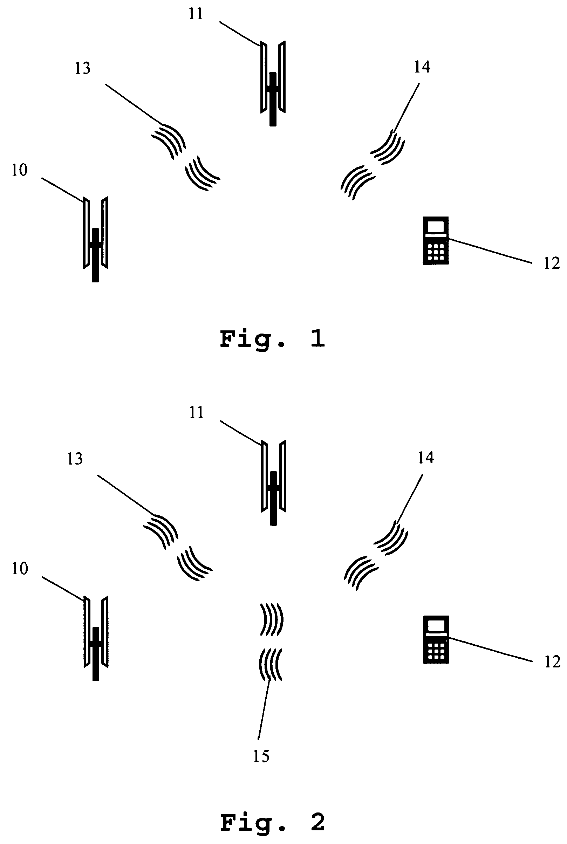

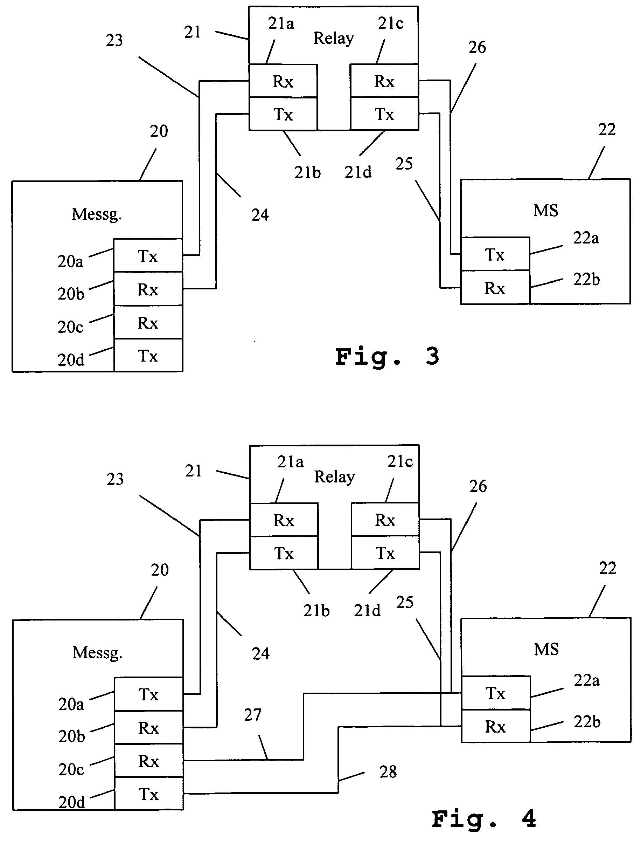

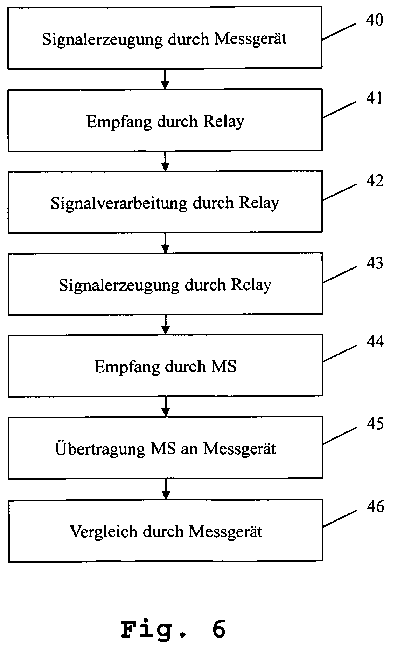

Zunächst werden anhand der Figuren 1 - 2 der Aufbau und die Funktionsweise beispielhafter Kommunikationssysteme erläutert. Mittels Fig. 3 - 5 wird der Aufbau und die Funktionsweise der erfindungsgemäßen Messvorrichtung gezeigt. Abschließend wird anhand der Fig. 6 - 8 die Funktionsweise des erfindungsgemäßen Messverfahrens erläutert. Identische Elemente wurden in ähnlichen Abbildungen zum Teil nicht wiederholt dargestellt und beschrieben.

Fig. 1 zeigt ein erstes beispielhaftes Kommunikationssystem. Eine Basisstation 10 steht über einen Übertragungskanal 13 mit einer Relay-Station 11 in Verbindung. Die Relay-Station 11 ist über einen Übertragungskanal 14 mit einer Mobilstation 12 verbunden. Dabei befindet sich die Mobilstation 12 außerhalb der Reichweite der Basisstation 10 oder zumindest bestehen zwischen diesen beiden derart schlechte Übertragungsbedingungen, dass eine Übertragung nur unter Qualitätseinbußen möglich ist. Stattdessen findet die Kommunikation zwischen der Basisstation 10 und der Mobilstation 12 über die Relay-Station 11 statt.

Dabei werden sämtliche Signale der Basisstation 10 zunächst über den Übertragungskanal 13 an die Relay-Station 11 gesendet. Die Relay-Station 11 setzt die Signale um und sendet sie über den Übertragungskanal 14 an die Mobilstation 12. Im Gegenzug von der Mobilstation 12 gesendete Signale werden über den Übertragungskanal 14 an die Relay-Station 11 übertragen, von dieser umgesetzt und über den Übertragungskanal 13 an die Basisstation 10 übertragen. Die Signale beinhalten dabei sowohl Nutzdaten wie auch Steuerungsinformationen, welche gemeinsam über die Relay-Station 11 übertragen werden.

In Fig. 2 wird ein zweites beispielhaftes Kommunikationssystem dargestellt. Das hier gezeigte Kommunikationssystem entspricht weitgehend dem Kommunikationssystem aus Fig. 1. Die Basisstation 10 und die Mobilstation 12 befinden sich hier jedoch in ausreichender Nähe, so dass auch ein Kommunikationskanal 15 zwischen der Basisstation 10 und der Mobilstation 12 existiert und genutzt wird. Es findet hierbei eine Trennung zwischen Steuerungsinformationen und Nutzdaten statt. Der Übertragungskanal 15 zwischen der Basisstation 10 und der Mobilstation 12 ist von deutlich geringerer Qualität als die Übertragungskanäle 13 und 14 zwischen der Basisstation 10 und der Relay-Station 11 und zwischen der Relay-Station 11 und der Mobilstation 12.

Es werden deshalb über den Übertragungskanal 15 lediglich Steuerungsinformationen zwischen der Basisstation 10 und der Mobilstation 12 ausgetauscht. Die Relay-Station 11 kann so von der Verarbeitung von Steuerungsinformationen entlastet werden. Über die Übertragungskanäle 13, 14 werden lediglich Nutzdaten von der Basisstation 10 an die Mobilstation 12 übermittelt. So können eine höhere Qualität der Signalübertragung und damit eine größere Datenrate als bei Übertragung sämtlicher Daten über den Übertragungskanal 15 erreicht werden.

Um eine Relay-Station im Feld zu vermessen, sind aufwendige Messfahrten notwendig. Darüber hinaus sind die exakten Kanalbedingungen nicht bekannt. Es kann somit keine hochgenaue Überprüfung der Relay-Station erfolgen.

Fig. 3 zeigt eine erste beispielhafte Messvorrichtung. Ein Messgerät 20 ist über die Verbindungsleitungen 23, 24 mit der zu vermessenden Relay-Station 21 verbunden. Weiterhin ist die zu vermessende Relay-Station 21 über die Verbindungsleitungen 25, 26 mit einem Empfangsgerät 22 verbunden. Es kann sich dabei z.B. um eine Mobilstation 22 oder ein Messgerät handeln. In diesem Ausführungsbeispiel handelt es sich bei dem Empfangsgerät 22 um eine Mobilstation 22. Das Empfangsgerät 22 ist dabei Teil der Messvorrichtung.

Eine erste Sendeeinrichtung 20a des Messgeräts 20 ist mittels der Verbindungsleitung 23 mit einer ersten Empfangseinrichtung 21a der Relay-Station 21 verbunden. Eine erste Empfangseinrichtung 20b des Messgeräts 20 ist dabei mittels der Verbindungsleitung 24 mit einer ersten Sendeeinrichtung 21b der Relay-Station 21 verbunden. Eine zweite Empfangseinrichtung 21c der Relay-Station 21 ist mittels der Verbindungsleitung 26 mit einer Sendeeinrichtung 22a des Empfangsgeräts 22 verbunden. Eine zweite Sendeeinrichtung 21d der Relay-Station 21 ist mittels der Verbindungsleitung 25 mit einer Empfangseinrichtung 22b des Empfangsgeräts 22 verbunden.

Das Messgerät 20 simuliert in diesem Aufbau eine Basisstation, welche mit der Relay-Station 21 verbunden ist. Die Sendeeinrichtung 20a und die Empfangseinrichtung 20b des Messgeräts 20 kommunizieren mit der Empfangseinrichtung 21a und der Sendeeinrichtung 21b der Relay-Station 21. Die Kommunikation zwischen dem Messgerät 20 und der Relay-Station 21 entspricht dabei der Kommunikation zwischen einer herkömmlichen Basisstation und der zu vermessenden Relay-Station 21.

Die Relay-Station 21 steht mit der Mobilstation 22 ebenso in Kommunikationsverbindung. Die Empfangseinrichtung 21c und die Sendeeinrichtung 21d der Relay-Station 21 kommunizieren dabei mit der Sendeeinrichtung 22a und der Empfangseinrichtung 22b des Empfangsgeräts 22. Die Kommunikation zwischen der Relay-Station 21 und der Mobilstation 22 entspricht dabei einer Kommunikation der zu vermessenden Relay-Station 21 mit einer herkömmlichen Mobilstation.

Das Messgerät 20 baut über die zu vermessende Relay-Station 21 eine Kommunikationsverbindung zu der Mobilstation 22 auf. Es werden Signale von dem Messgerät 20 an die Relay-Station 21 übertragen. Die Relay-Station 21 setzt diese Signale um und überträgt sie an die Mobilstation 22. Die Mobilstation 22 überträgt weiterhin Signale an die Relay-Station 21, welche diese umsetzt und an das Messgerät 20 überträgt. Das Messgerät 20 und die Mobilstation 22 zeichnen dabei gesendete und empfangene Signale auf. Über eine hier nicht dargestellte Verbindung sind das Messgerät 20 und die Mobilstation 22 weiterhin miteinander verbunden. Die von der Mobilstation 22 aufgezeichneten Signale werden hierüber an das Messgerät 20 übertragen. Das Messgerät 20 vergleicht die selbst aufgezeichneten Signale und die von der Mobilstation aufgezeichneten Signale und bestimmt daraus zumindest einen Parameter, welcher die Tauglichkeit der Relay-Station 21 anzeigt. Auch eine Bestimmung mehrerer solcher Parameter ist möglich.

Optional können das erste Messgerät und die Mobilstation bzw. das zweite Messgerät durch ein gemeinsames Messgerät, welche die Funktionen des ersten Messgerät und der Mobilstation bzw. des zweiten Messgeräts erfüllen, ersetzt werden. Die Relay-Station 21 ist dann nur mit diesem einen Messgerät verbunden.

Die in Fig. 3 beispielhafte Messvorrichtung entspricht dem Kommunikationssystem aus Fig. 1. In Fig. 4 wird eine zweite beispielhafte Messvorrichtung gezeigt. Dieses zweite Beispiel entspricht dem Kommunikationssystem aus Fig. 2. Die Messvorrichtung aus Fig. 4 entspricht weitgehend der Messvorrichtung aus Fig. 3. In Fig. 4 ist das Messgerät 20 weiterhin mittels Verbindungsleitungen 27, 28 mit der Mobilstation 22 verbunden. Eine zweite Empfangseinrichtung 20c und eine zweite Sendeeinrichtung 20d des Messgeräts 20 stehen dabei in Kommunikationsverbindung mit der Sendeeinrichtung 22a und der Empfangseinrichtung 22b der Mobilstation 22. Auch ein Einsatz zweiter Sende- und Empfangseinrichtungen in dem Empfangsgerät 22 ist hier möglich. D.h. die zweiten Sende- und Empfangseinrichtungen 20c, 20d des Messgeräts 20 sind dann mittels der Verbindungsleitungen 27, 28 mit den hier nicht dargestellten zweiten Sende- und Empfangseinrichtungen des Empfangsgeräts 22 verbunden. Bei dem Empfangsgerät 22 handelt es sich auch hier um eine Mobilstation 22. Alternativ könnte es sich dabei um ein zweites Messgerät handeln.

Auch hier übernimmt das Messgerät 20 die Rolle einer Basisstation. Das Messgerät 20 steht in Kommunikationsverbindung mit der Relay-Station 21. Die Relay-Station 21 wiederum steht in Kommunikationsverbindung mit der Mobilstation 22. Über die Kommunikationsverbindung des Messgeräts 20 zur Relay-Station 21 und von der Relay-Station 21 zur Mobilstation 22 werden erfindungsgemäß lediglich Nutzdaten übertragen.

Steuerungsinformationen werden direkt zwischen dem Messgerät 20 und der Mobilstation 22 übertragen. Mit diesem Aufbau kann die Relay-Station 21 hinsichtlich der reinen Übertragung von Nutzdaten vermessen werden. Auch eine Ermittlung eines Datendurchsatzes (Throughput-Messung) der Relay-Station 21 ist hier möglich.

Optional können das erste Messgerät und die Mobilstation bzw. das zweite Messgerät wie bereits zu Fig. 3 beschrieben durch ein gemeinsames Messgerät, welches die Funktionen des ersten Messgeräts und der Mobilstation bzw. des zweiten Messgeräts erfüllt, ersetzt werden. Die Relay-Station 21 ist dann nur mit diesem einen Messgerät verbunden. Die Verbindung zwischen dem ersten Messgerät und der Mobilstation 22 fällt dann weg. Die Signale werden lediglich innerhalb des gemeinsamen Messgeräts übertragen.

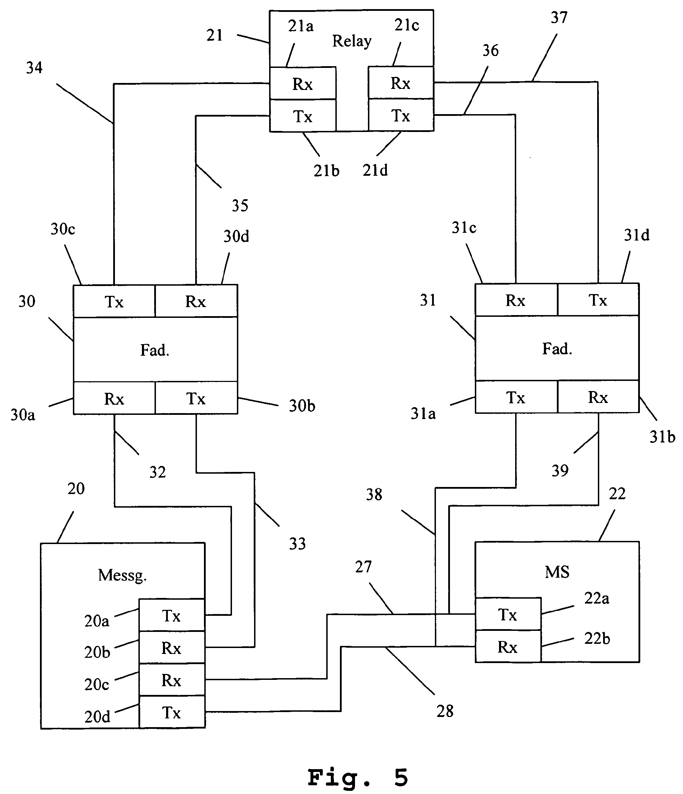

In Fig. 5 wird ein Ausführungsbeispiel der erfindungsgemäßen Messvorrichtung dargestellt. Der Aufbau entspricht zum Teil dem Aufbau aus Fig. 3 und Fig. 4. Sind das Messgerät 20 und das Empfangsgerät 22 direkt mit der Relay-Station 21 verbunden, wie dies in Fig. 3 und Fig. 4 dargestellt ist, so liegen ideale Übertragungsbedingungen vor. Die auf diese Art und Weise gewonnenen Messergebnisse stimmen jedoch nicht mit im realen Einsatz gewonnenen Messwerten überein.

Um eine höhere Vergleichbarkeit der im Labor ermittelten Messwerte mit im realen Einsatz zu erwartenden Messwerten zu gewährleisten, ist hier zwischen das Messgerät 20 und die Relay-Station 21 eine Fading-Einrichtung 30 geschaltet. Die Fading-Einrichtung 30 verfügt dabei über eine erste Empfangseinrichtung 30a, eine erste Sendeeinrichtung 30b, eine zweite Sendeeinrichtung 30c und eine zweite Empfangseinrichtung 30d.

Die erste Sendeeinrichtung 20a des Messgeräts 20 ist mittels einer Verbindungsleitung 32 mit der ersten Empfangseinrichtung 30a der Fading-Einrichtung 30 verbunden. Die erste Empfangseinrichtung 20b des Messgeräts 20 ist mittels der Verbindungsleitung 33 mit der ersten Sendeeinrichtung 30b der Fading-Einrichtung 30 verbunden. Die zweite Sendeeinrichtung 30c der Fading-Einrichtung 30 ist mittels einer Verbindungsleitung 34 mit der ersten Empfangseinrichtung 21a der Relay-Station 21 verbunden. Die zweite Empfangseinrichtung 30d der Fading-Einrichtung 30 ist mittels der Verbindungsleitung 35 mit der ersten Sendeeinrichtung 21b der Relay-Station 21 verbunden.

Die Fading-Einrichtung 30 simuliert dabei reale Übertragungsbedingungen auf einem Übertragungskanal, wie er in Fig. 1 und Fig. 2 dargestellt ist. Die Fading-Einrichtung 30 fügt dem Signal Fading (schwankender Signalschwund) und/oder Rauschen und/oder eine Mehrwegeausbreitung hinzu. Eine Simulation weiterer Parameter eines herkömmlichen Übertragungskanals durch die Fading-Einrichtung 30 ist möglich.

Auch die Übertragung von der Relay-Station 21 zu dem Empfangsgerät 22 wird mit einer Fading-Einrichtung 31 versehen. Bei dem Empfangsgerät 22 handelt es sich auch in diesem Ausführungsbeispiel um eine Mobilstation 22. Alternativ könnte es sich auch hier um ein zweites Messgerät handeln. Die Fading-Einrichtung 31 verfügt dabei über eine erste Sendeeinrichtung 31a, eine erste Empfangseinrichtung 31b, eine zweite Empfangseinrichtung 31c und eine zweite Sendeeinrichtung 31d.

Die zweite Empfangseinrichtung 21c der Relay-Station 21 ist mittels der Verbindungsleitung 37 mit der zweiten Sendeeinrichtung 31d der Fading-Einrichtung 31 verbunden. Die zweite Sendeeinrichtung 21d der Relay-Station 21 ist mittels einer Verbindungsleitung 36 mit der zweiten Empfangseinrichtung 31c der Fading-Einrichtung 31 verbunden. Die erste Sendeeinrichtung 31a der Fading-Einrichtung 31 ist mittels der Übertragungsleitung 38 mit der Empfangseinrichtung 22b der Mobilstation 22 verbunden. Die erste Empfangseinrichtung 31b der Fading-Einrichtung 31 ist mittels der Übertragungsleitung 39 mit der ersten Sendeeinrichtung 22a der Mobilstation 22 verbunden.

Die Funktion der Fading-Einrichtung 31 entspricht dabei der Funktion der Fading-Einrichtung 30. Auch die Fading-Einrichtung 31 simuliert reale Übertragungsbedingungen zwischen der Relay-Station 21 und der Mobilstation 22.

Optional kann auch lediglich eine Fading-Einrichtung 30, 31 eingesetzt werden. In diesem Fall wird lediglich die Fähigkeit der Relay-Station 21 vermessen, mit realen Kanalbedingungen auf dem Übertragungskanal, in welchem die Fading-Einrichtung 30, 31 eingesetzt ist, zurechtzukommen.

Üblicherweise wirken die Fading-Einrichtungen 30, 31 im Hochfrequenzbereich. D.h. das Messgerät 20 und das Empfangsgerät 22 erzeugen Sendesignale, wie sie einer Antenne zugeführt würden. Diese Sendesignale werden den Fading-Einrichtungen 30, 31 zugeführt und von diesen verarbeitet. Eine Fading-Einrichtung, welche im Hochfrequenzbereich arbeitet, ist jedoch sehr aufwendig und teuer. Alternativ zu Fading-Einrichtungen, welche im Hochfrequenzbereich arbeiten, können Fading-Einrichtungen, welche im Basisband-Bereich arbeiten, eingesetzt werden.

In diesem Fall beinhalten die Fading-Einrichtungen 30, 31 in jeder Sendeeinrichtung 30b, 30c, 31a, 31d eine Modulationseinrichtung und in jeder Empfangseinrichtung 30a, 30d, 31b, 31c eine Demodulationseinrichtung. Die Demodulationseinrichtungen demodulieren die empfangenen Signale und transformieren sie in das Basisband. Die Modulationseinrichtungen modulieren die Signale und erzeugen Hochfrequenzsignale. Auch der Einsatz einer Fading-Einrichtung, welche im Hochfrequenzbereich arbeitet, und einer Fading-Einrichtung, welche im Basisbandbereich arbeitet, in einer gemeinsamen Messanordnung ist möglich. Eine Fading-Einrichtung, welche im Basisbandbereich arbeitet, kann z.B. durch den Einsatz eines Hochfrequenzmessgeräts und eines Signalgenerators realisiert werden. Der Signalgenerator führt dabei das tatsächliche Fading und die Modulation durch, während das Hochfrequenzmessgerät die Demodulation durchführt.

Optional kann zusätzlich zwischen dem Messgerät 20 und dem Empfangsgerät 22 eine zusätzliche Fading-Einrichtung eingesetzt werden. In diesem Fall wird die Fähigkeit der Relay-Station 21, eine Verbindung bei gestörten Steuerungsinformationen aufrechtzuerhalten, überprüft.

Das erste Messgerät vergleicht, wie zu Fig. 3 beschrieben, die selbst ausgesendeten Signale mit von der Mobilstation 22 bzw. dem zweiten Messgerät empfangenen Signalen. Dabei führt es eine Synchronisierung der Signale durch. Die Synchronisierung erfolgt dabei z.B. anhand von Rahmennummern, welche als Teil der Signale übertragen werden. Auch eine Synchronisierung mittels einer Korrelation ist möglich. Nachdem so die einander entsprechenden Abschnitte der Signale ermittelt wurden, vergleicht das erste Messgerät diese miteinander. Aus dem Vergleich bestimmt das erste Messgerät zumindest einen Parameter, welcher die Qualität bzw. Tauglichkeit der vermessenen Relay-Station 21 anzeigt. Optional stellt das erste Messgerät diesen zumindest einen Parameter, z.B. die Empfangs-Feldstärke und/oder der die Bitfehlerrate und/oder die Blockfehlerrate und/oder den Signal/Rausch-Abstand, auf einer Anzeigeeinrichtung dar. Die hier beschriebenen Schritte können in sämtlichen dargestellten Ausführungsbeispielen durchgeführt werden.

Neben dem exakten Vergleich der Signale besteht als weitere Messoption die Bestimmung eines Datendurchsatzes (Throughput-Messung) bei bestimmten Übertragungsbedingungen. Hierzu stellen zunächst die Fading-Einrichtungen bestimmte Übertragungsbedingungen ein. Anschließend wird eine Kommunikation wie zuvor beschrieben über die Relay-Station 21 durchgeführt. Nach Abschluss der Kommunikation wertet das erste Messgerät aus, wie hoch der Datendurchsatz während der Kommunikation war. Eine Unterscheidung hinsichtlich der Übertragungsrichtung ist hierbei möglich. Auch eine Wiederholung der Messung für mehrere unterschiedliche Übertragungsbedingungen ist denkbar. Eine solche Messung kann auch mit den erfindungsgemäßen Ausführungsbeispielen gemäß den Fig. 3 und Fig. 4 durchgeführt werden. In diesem Fall fällt die Simulation der Übertragungsbedingungen weg. Es erfolgt eine Messung des Datendurchsatzes bei idealen Bedingungen.

Optional können das erste Messgerät und das Empfangsgerät, wie bereits zu Fig. 3 und Fig. 4 beschrieben, durch ein gemeinsames Messgerät, welches die Funktionen des ersten Messgeräts und der Mobilstation bzw. des zweiten Messgeräts erfüllt, ersetzt werden. Die Relay-Station 21 ist dann nur mittels der Fading-Einrichtungen 30, 31 mit diesem einen Messgerät verbunden.

Optional können auch die Fading-Einrichtungen 30, 31 in dieses gemeinsame Messgerät integriert werden. D.h. die zu vermessende Relay-Station ist lediglich mit einem gemeinsamen Messgerät verbunden.

In Fig. 6 wird ein beispielhaftes Messverfahren dargestellt. In einem ersten Schritt 40 wird ein Hochfrequenzsignal durch ein Messgerät erzeugt und an die zu vermessende Relay-Station gesendet. In einem zweiten Schritt 41 wird das von dem Messgerät ausgesendete Signal durch die Relay-Station empfangen. In einem dritten Schritt 43 wird das empfangene Signal von der Relay-Station verarbeitet. Je nach Typ der Relay-Station erfolgen hierbei lediglich eine Frequenzumsetzung oder aufwändigere Verarbeitungsschritte, wie z.B. eine Demodulation und erneute Modulation. In einem vierten Schritt 43 erzeugt die Relay-Station ihrerseits ein Sendesignal aus dem empfangenen verarbeiteten Signal und sendet es an ein Empfangsgerät, z.B. ein zweites Messgerät oder eine Mobilstation.
In einem fünften Schritt 44 wird das von der Relay-Station ausgesendete Signal durch das zweite Messgerät, bzw. die Mobilstation empfangen. In einem sechsten Schritt 45 wird das von dem zweiten Messgerät bzw. der Mobilstation empfangene Signal an das erste Messgerät übertragen. In einem siebten Schritt 46 vergleicht das erste Messgerät das selbst ausgesendete Signal mit dem durch das zweite Messgerät bzw. die Mobilstation empfangene Signal. Dabei wird zumindest ein Parameter ermittelt, welcher die Qualität der Signalumsetzung durch die Relay-Station anzeigt. Auch eine Ermittlung mehrerer solcher Parameter ist möglich. Auch eine Ermittlung eines erreichten Datendurchsatzes ist hier möglich. In einem optionalen achten Schritt, welcher hier nicht dargestellt ist, wird der zumindest eine so gewonnene Parameter angezeigt.

Zur vollständigen Vermessung der Relay-Station kann optional anschließend eine Vermessung in umgekehrter Übertragungsrichtung durchgeführt werden. D.h. das zweite Messgerät bzw. die Mobilstation überträgt ein Signal an die Relay-Station, welche das Signal umsetzt und an das erste Messgerät aussendet. Auch hier vergleicht das erste Messgerät das durch das zweite Messgerät bzw. die Mobilstation ausgesendete Signal mit dem selbst empfangenen Signal.

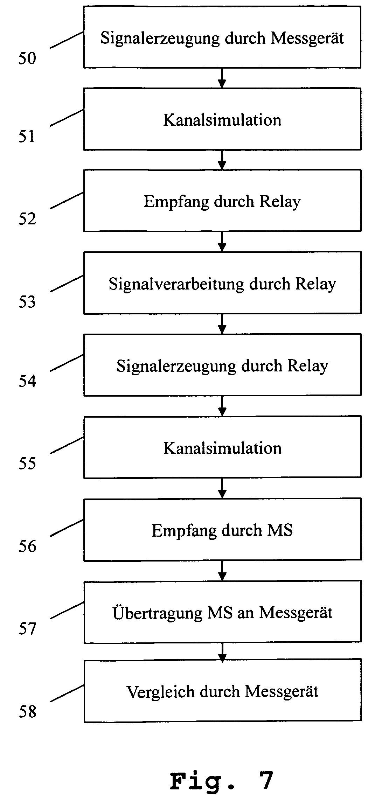

Fig. 7 zeigt ein beispielhaftes Messverfahren. In einem ersten Schritt 50 wird durch ein erstes Messgerät ein Hochfrequenzsignal erzeugt und ausgesendet. In einem zweiten Schritt 51 findet eine Kanalsimulation statt. D.h. das von dem ersten Messgerät ausgesendete Signal wird derart manipuliert, dass es erscheint, als wäre es über einen realen Übertragungskanal übertragen worden. D.h. dem durch das erste Messgerät erzeugten Signal wird Rauschen und/oder Fading hinzugefügt. Auch eine Hinzufügung von einer Mehrwegeausbreitung oder weiteren Modifikationen sind möglich.

In einem dritten Schritt 52 wird dieses modifizierte Signal durch die zu vermessende Relay-Station empfangen. In einem vierten Schritt 53 wird das empfangene Signal durch die Relay-Station verarbeitet. Dieser Schritt entspricht dem Schritt 42 aus Fig. 6. In einem fünften Schritt 54 wird erneut ein Signal durch die Relay-Station erzeugt und ausgesendet. Dieses Signal ist dabei abgeleitet von dem durch die Relay-Station empfangenen Signal. In einem sechsten Schritt 55 wird eine erneute Kanalsimulation durchgeführt. D.h. das von der Relay-Station ausgesendete Signal wird derart modifiziert, dass es erscheint, als wäre es über einen realen Übertragungskanal übertragen worden. D.h. auch diesem Signal wird Rauschen und/oder Fading und/oder eine Mehrwegeausbreitung hinzugefügt.

In einem siebten Schritt 56 wird dieses modifizierte Signal durch ein Empfangsgerät, z.B. ein zweites Messgerät oder eine Mobilstation, empfangen. In einem achten Schritt 57 wird das empfangene Signal durch das Empfangsgerät an das erste Messgerät übertragen. In einem neunten Schritt 58 findet ein Vergleich des durch das erste Messgerät ausgesendeten Signals und des empfangenen Signals durch das erste Messgerät statt. Dieser Schritt entspricht dem Schritt 46 aus Fig. 6.

Die Schritte 51 und 55 sind dabei optional. D.h. es ist möglich, auch nur eine Kanalsimulation, d.h. Schritt 51 oder Schritt 55, durchzuführen. Wie bereits zu Fig. 6 beschrieben ist auch hier eine anschließende Umkehrung der Signalrichtung optional möglich.

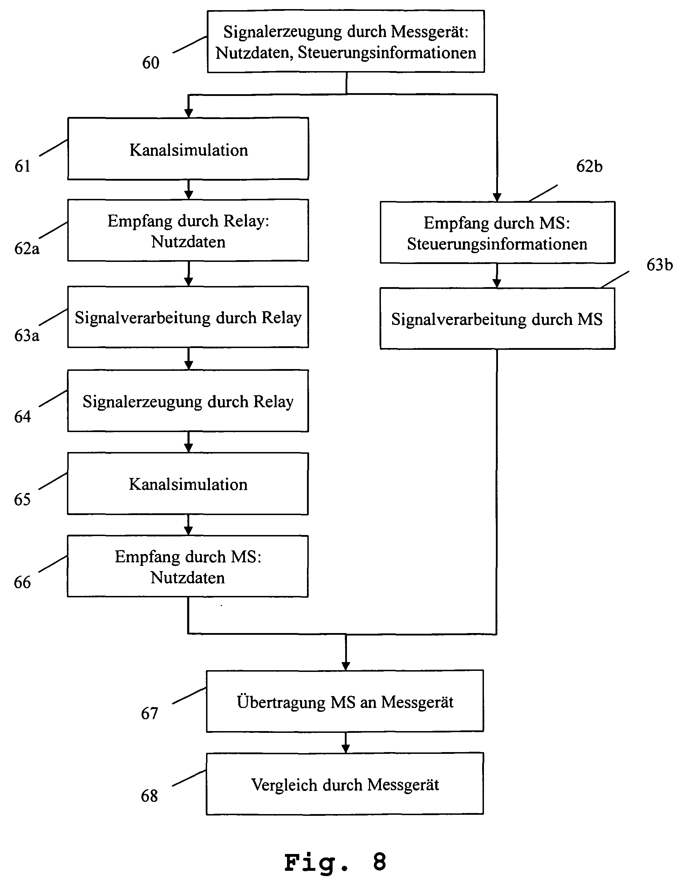

Fig. 8 zeigt ein Ausführungsbeispiel des erfindungsgemäßen Messverfahrens. In einem ersten Schritt 60 erzeugt ein erstes Messgerät ein Hochfrequenzsignal. Das Signal besteht dabei aus Nutzdaten und Steuerungsinformationen. Das Signal wird durch das Messgerät ausgesendet. Die Steuerungsinformationen werden dabei einem zweiten Messgerät bzw. einer Mobilstation zugeführt.

Die Nutzdaten werden in einem zweiten Schritt 61 einer Kanalsimulation unterzogen. D.h. die Nutzdaten werden derart modifiziert, dass sie erscheinen, als wären sie über einen realen Übertragungskanal übertragen worden. D.h. dem Signal wird Rauschen und/oder Fading und/oder eine Mehrwegeausbreitung hinzugefügt. Auch eine Hinzufügung weiterer Modifikationen ist möglich.

In einem dritten Schritt 62a werden die Nutzdaten durch die zu vermessende Relay-Station empfangen. Gleichzeitig werden die Steuerungsinformationen in einem vierten Schritt 62b durch die Mobilstation bzw. durch das zweite Messgerät empfangen. In einem fünften Schritt 63a führt die Relay-Station eine Verarbeitung der empfangenen Daten durch. Dieser Schritt entspricht dem Schritt 42 aus Fig. 6. Gleichzeitig führt die Mobilstation bzw. das zweite Messgerät in einem sechsten Schritt 63b eine Verarbeitung der empfangenen Steuerungsinformationen durch.

In einem siebten Schritt 64 erzeugt die zu vermessende Relay-Station ausgehend von dem verarbeiteten empfangenen Signal ein auszusendendes Signal und sendet dieses aus. In einem achten Schritt 65 wird eine erneute Kanalsimulation an diesem Signal durchgeführt. D.h. dem von der Relay-Station erzeugten Signal werden Rauschen und/oder Fading und/oder Mehrwegeausbreitung und/oder weitere Modifikationen hinzugefügt. In einem neunten Schritt 66 wird dieses Signal durch ein Empfangsgerät, z.B. eine Mobilstation oder ein zweites Messgerät, empfangen.

In einem zehnten Schritt 67 überträgt das zweite Messgerät bzw. die Mobilstation die Nutzdaten, welche von der Relay-Station empfangen wurden, und die Steuerungsinformationen, welche von dem ersten Messgerät empfangen wurden, zurück an das erste Messgerät. In einem elften Schritt 68 führt das erste Messgerät anschließend einen Vergleich, der selbst ausgesendeten Signale und der von dem zweiten Messgerät bzw. von der Mobilstation empfangenen Signale durch. Dieser Schritt entspricht dem Schritt 46 aus Fig. 6.

Dabei wird eine Synchronisierung der Signale durchgeführt. Die Synchronisierung erfolgt dabei z.B. anhand von Rahmennummern, welche als Teil der Signale übertragen werden. Auch eine Synchronisierung mittels einer Korrelation ist möglich. Nachdem so die einander entsprechenden Abschnitte der Signale ermittelt wurden, werden die Signale miteinander verglichen. Aus dem Vergleich bestimmt das erste Messgerät zumindest einen Parameter, welcher die Qualität bzw. Tauglichkeit der vermessenen Relay-Station anzeigt. Optional wird dieser zumindest eine Parameter dargestellt. Die hier beschriebenen Schritte sind in sämtlichen dargestellten Ausführungsbeispielen des erfindungsgemäßen Messverfahrens denkbar.

Optional kann auch hier zusätzlich eine Messung mit umgekehrter Signalrichtung angeschlossen werden. D.h. das Empfangsgerät erzeugt ein Signal bestehend aus Nutzdaten und Steuerungsinformationen und überträgt es auf gleiche Weise an die Relay-Station, welche es an das erste Messgerät überträgt. Der Vergleich der Signale findet auch hier im ersten Messgerät statt.

Optional kann zusätzlich eine Kanalsimulation zwischen den Schritten 60 und 62b eingesetzt werden. Durch Hinzufügung dieser Kanalsimulation kann die Fähigkeit der Relay-Station, mit gestörten Steuerungsinformationen korrekt zu arbeiten, überprüft werden.

Die Erfindung ist nicht auf das dargestellte Ausführungsbeispiel beschränkt. Wie bereits erwähnt, können unterschiedliche Kommunikationssysteme, welche Relay-Stationen einsetzen, eingesetzt werden. Ein Einsatz mit Relay-Stationen unterschiedlicher Funktionalität ist möglich. Auch eine genauere Kanalsimulation ist möglich. In diesem Fall werden zusätzliche Modifikationen an den übertragenen Signalen durchgeführt. Alle vorstehend beschriebenen Merkmale oder in den Figuren gezeigten Merkmale sind im Rahmen der Erfindung beliebig vorteilhaft miteinander kombinierbar.

## Patentansprüche

1. System umfassend eine Relay-Station (21) und eine Messvorrichtung zur Vermessung von Relay-Stationen (21) im Labor, welche zur Erhöhung der Reichweite und/oder zur Verbesserung der Empfangsbedingungen von Mobilstationen (12) in Mobilfunksystemen dienen, mit zumindest einem ersten Messgerät (20) und einem Empfangsgerät (22), wobei das erste Messgerät (20) ausgebildet ist, um ein erstes Signal zu erzeugen und das erste Signal zumindest mittelbar an eine Relay-Station (21) zu senden, wobei durch die Relay-Station (21) eine Verbindung zwischen einer Mobilstation (12) und einer Basisstation (10) herstellbar ist,
wobei das Empfangsgerät (22) ausgebildet ist, um von der Relay-Station (21) ein von dem ersten Signal abgeleitetes zweites Signal zu empfangen,
wobei das erste Messgerät (20) ausgebildet ist, um das erste Signal und zumindest ein von dem zweiten Signal abgeleitetes Signal zu synchronisieren und zu vergleichen,
**dadurch gekennzeichnet,**
**dass** das erste Messgerät (20) ausgebildet ist beim Vergleichen der Signale die Qualität und die Geschwindigkeit der Signalübertragung über die zu vermessende Relay-Station (1) zu ermitteln durch einen Vergleich des vom Messgerät (20) ausgesendeten Signals mit dem von der Mobilstation (12) empfangenen Signals und eine Trennung zwischen Steuerungsinformation und Nutzdaten durchzuführen und ausgebildet ist über die Übertragungskanäle (13, 14) zwischen der Basisstation (10) und der Relay-Station (11) und zwischen der Relay-Station (11) und der Mobilstation (12) lediglich die Nutzdaten zu übertragen, und dass die Messvorrichtung weiterhin eine erste Fading-Einrichtung (30) beinhaltet,
**dass** das erste Messgerät (20) ausgebildet ist, um das erste Signal an die erste Fading-Einrichtung (30) zu senden,
**dass** die erste Fading-Einrichtung (30) ausgebildet ist, um dem ersten Signal Fading und/oder Rauschen und/oder Mehrwegeausbreitung hinzuzufügen und es als drittes Signal an die Relay-Station (21) zu senden und dass das Empfangsgerät ausgebildet ist, das zweite Signal von dem dritten Signal abzuleiten.

2. System nach Anspruch 1,
wobei die erste Fading-Einrichtung (30) ausgebildet ist, im Basisbandbereich oder im Hochfrequenzbereich zu arbeiten.

3. System nach einem der Ansprüche 1 bis 2, wobei die Messvorrichtung weiterhin eine zweite Fading-Einrichtung (31) beinhaltet,
wobei die Relay-Station (21) ausgebildet ist, um ein von dem ersten Signal abgeleitetes Signal an die zweite Fading-Einrichtung (31) zu senden,
wobei die zweite Fading-Einrichtung (31) ausgebildet ist, um dem von dem ersten Signal abgeleiteten Signal Fading und/oder Rauschen und/oder Mehrwegeausbreitung hinzuzufügen und es als viertes Signal an das Empfangsgerät (22) zu senden und dass das vierte Signal von dem zweiten Signal abgeleitet ist.

4. System nach Anspruch 3,
wobei die zweite Fading-Einrichtung (31) ausgebildet ist, im Basisbandbereich oder im Hochfrequenzbereich zu arbeiten.

5. System nach einem der Ansprüche 1 bis 4,
wobei das Empfangsgerät (22) ein zweites Messgerät oder eine Mobilstation (22) ist.

6. System nach einem der Ansprüche 1 bis 5,
wobei das erste Messgerät (20) und das Empfangsgerät (22) in ein gemeinsames Gerät integriert sind.

7. Messverfahren zur Vermessung von Relay-Stationen (21) im Labor, welche zur Erhöhung der Reichweite und/oder zur Verbesserung der Empfangsbedingungen von Mobilstationen (12) in Mobilfunksystemen dienen, wobei ein erstes Signal durch ein erstes Messgerät erzeugt und zumindest mittelbar an eine Relay-Station (21) gesendet wird, wobei die Relay-Station (21) eine Verbindung zwischen einer Mobilstation (12) und einer Basisstation (10) herstellt, wobei ein von dem ersten Signal abgeleitetes zweites Signal empfangen wird, wobei das erste Signal und zumindest ein von dem zweiten Signal abgeleitetes Signal synchronisiert und verglichen werden,
**dadurch gekennzeichnet,**
**dass** das erste Messgerät (20) beim Vergleichen der Signale die Qualität und die Geschwindigkeit der Signalübertragung über die zu vermessende Relay-Station (21) durch einen Vergleich des vom Messgerät (20) ausgesendeten Signals mit dem von der Mobilstation (12) empfangenen Signals ermittelt,
wobei eine Trennung zwischen Steuerungsinformation und Nutzdaten stattfindet,
**dass** über die Übertragungskanäle (13, 14) zwischen der Basisstation (10) und der Relay-Station (11) und zwischen der Relay-Station (11) und der Mobilstation (12) lediglich die Nutzdaten übertragen werden,
**dass** dem ersten Signal Fading und/oder Rauschen und/oder eine Mehrwegeausbreitung zur Erzeugung eines modifizierten ersten Signals hinzugefügt wird, dass das modifizierte erste Signal als drittes Signal an die zu vermessende Relay-Station (21) gesendet wird und dass das zweite Signal von dem dritten Signal abgeleitet wird.

8. Messverfahren nach Anspruch 7,
wobei dem von dem ersten Signal abgeleiteten Signal Fading und/oder Rauschen und/oder eine Mehrwegeausbreitung hinzugefügt wird, dass dieses modifizierte Signal als viertes Signal an das Empfangsgerät ausgesendet wird und dass das vierte Signal von dem zweiten Signal abgeleitet wird.

## Claims

1. System comprising a relay station (21) and a measuring device for laboratory measurement of relay stations (21) which are used to increase the range and/or to improve the reception conditions of mobile stations (12) in mobile radio systems, with at least a first measuring unit (20) and a receiving unit (22), wherein the first measuring unit (20) is configured to generate a first signal and send the first signal at least indirectly to a relay station (21), wherein a connection can be produced between a mobile station (12) and a base station (10) by the relay station (21), wherein the receiving unit (22) is configured to receive from the relay station (21) a second signal derived from the first signal, wherein the first measuring unit (20) is configured to synchronise and compare the first signal and at least one signal derived from the second signal,
**characterised in that**
the first measuring unit (20) is configured when comparing the signals to determine the quality and the speed of signal transmission via the relay station (21) to be measured by comparison of the signal sent out by the measuring unit (20) with the signal received by the mobile station (12) and separation of control information and useful data and is configured to transmit solely the useful data via the transmission channels (13, 14) between the base station (10) and the relay station (11) and between the relay station (11) and the mobile station (12),
and **in that** the measuring device also comprises a first fading device (30),
**in that** the first measuring unit (20) is configured to send the first signal to the first fading device (30),
**in that** the first fading device (30) is configured to add fading and/or noise and/or multi-path propagation to the first signal and to send it to the relay station (21) as a third signal,
and **in that** the receiving unit is configured to derive the second signal from the third signal.

2. System according to claim 1,
wherein the first fading device (30) is configured to work in the base band range or in the high-frequency range.

3. System according to one of claims 1 and 2,
wherein the measuring device also comprises a second fading device (31),
wherein the relay station (21) is configured to send a signal derived from the first signal to the second fading device (31),
wherein the second fading device (31) is configured to add fading and/or noise and/or multi-path propagation to the signal derived from the first signal and to send it to the receiving unit (22) as a fourth signal,
and in that the fourth signal is derived from the second signal.

4. System according to claim 3,
wherein the second fading device (31) is configured to work in the base band range or in the high-frequency range.

5. System according to one of claims 1 to 4,
wherein the receiving unit (22) is a second measuring unit or a mobile station (22).

6. System according to one of claims 1 to 5,
wherein the first measuring unit (20) and the receiving unit (22) are integrated into a common unit.

7. Measuring method for laboratory measurement of relay stations (21) which are used to increase the range and/or to improve the reception conditions of mobile stations (12) in mobile radio systems,
wherein a first signal is generated by a first measuring unit and sent at least indirectly to a relay station (21), wherein the relay station (21) produces a connection between a mobile station (12) and a base station (10),
wherein a second signal derived from the first signal is received,
wherein the first signal and at least one signal derived from the second signal are synchronised and compared,
**characterised in that**
when comparing the signals the first measuring unit (20) determines the quality and the speed of signal transmission via the relay station (21) to be measured by comparison of the signal sent out by the measuring unit (20) with the signal received by the mobile station (12),
wherein separation takes place between control information and useful/desired data, **in that** only the useful data is transmitted via the transmission channels (13, 14) between the base station (10) and the relay station (11) and between the relay station (11) and the mobile station (12),
**in that** fading and/or noise and/or multi-path propagation is added to the first signal to generate a modified first signal,
**in that** the modified first signal is sent to the relay station (21) to be measured as a third signal and
**in that** the second signal is derived from the third signal.

8. Measuring method according to claim 7,
wherein fading and/or noise and/or multi-path propagation is added to the signal derived from the first signal,
in that this modified signal is sent out to the receiving unit as a fourth signal and
in that the fourth signal is derived from the second signal.

## Revendications

1. Système comportant une station relais (21) et un dispositif de mesure pour la mesure de stations relais (21) en laboratoire, qui sont utilisées pour augmenter la portée et/ou pour améliorer les conditions de réception des stations mobiles (12) dans des systèmes de téléphonie mobile, comportant au moins un premier appareil de mesure (20) et un appareil de réception (22),
dans lequel le premier appareil de mesure (20) est réalisé, pour générer un premier signal et envoyer le premier signal au moins indirectement à une station relais (21), dans lequel une liaison entre une station mobile (12) et une station de base (10) peut être établie par la station relais,
dans lequel l'appareil de réception (22) est réalisé, pour recevoir par la station relais (21) un second signal dérivé du premier signal,
dans lequel le premier appareil de mesure (20) est réalisé, pour synchroniser et pour comparer le premier signal et au moins un signal dérivé du second signal,
**caractérisé en ce que**
le premier appareil de mesure (20) est réalisé pour, lors de la comparaison des signaux, déterminer la qualité et la vitesse de la transmission de signal par l'intermédiaire de la station relais à mesurer (1) en comparant le signal envoyé par l'appareil de mesure (20) et le signal envoyé par la station mobile (12) et effectuer une séparation entre l'information de commande et les données utiles, et est réalisé pour transmettre uniquement les données utiles par l'intermédiaire des canaux de transmission (13, 14) entre la station de base (10) et la station relais (11) et entre la station relais (11) et la station mobile (12),
et **en ce que** le dispositif de mesure comporte en outre un premier dispositif de fading (30),
**en ce que** le premier appareil de mesure (20) est réalisé, pour envoyer le premier signal au premier dispositif de fading (30),
**en ce que** le premier dispositif de fading (30) est réalisé, pour ajouter au premier signal un fading et/ou un bruit et/ou une propagation par trajets multiples et l'envoyer en tant que troisième signal à la station relais (21) et
**en ce que** l'appareil de réception est réalisé pour dériver le second signal du troisième signal.

2. Système selon la revendication 1,
dans lequel le premier dispositif de fading (30) est réalisé, pour fonctionner dans la plage de la bande de base ou dans la plage des hautes fréquences.

3. Système selon l'une des revendications 1 à 2,
dans lequel le dispositif de mesure comporte en outre un second dispositif de fading (31),
dans lequel la station relais (21) est réalisée, pour envoyer un signal dérivé du premier signal au second dispositif de fading (31),
dans lequel le second dispositif de fading (31) est réalisé, pour ajouter au signal dérivé du premier signal un fading et/ou un bruit et/ou une propagation par trajets multiples et l'envoyer en tant que quatrième signal à l'appareil de réception (22) et
en ce que le quatrième signal est dérivé du second signal.

4. Système selon la revendication 3,
dans lequel le second dispositif de fading (31) est réalisé, pour fonctionner dans la plage de la bande de base ou dans la plage des hautes fréquences.

5. Système selon l'une des revendications 1 à 4,
dans lequel l'appareil de réception (22) est un second appareil de mesure ou une station mobile (22).

6. Système selon l'une des revendications 1 à 5,
dans lequel le premier appareil de mesure (20) et l'appareil de réception (22) sont intégrés dans un appareil commun.

7. Procédé de mesure pour mesurer des stations relais (21) en laboratoire, qui sont utilisées pour augmenter la portée et/ou pour améliorer les conditions de réception des stations mobiles (12) dans des systèmes de téléphonie mobile,
dans lequel un premier signal est généré par un premier appareil de mesure et envoyer au moins indirectement à une station relais (21), dans lequel la station relais (21) établit une liaison entre une station mobile (12) et une station de base (10),
dans lequel un second signal dérivé d'un premier signal est reçu,
dans lequel le premier signal et au moins un signal dérivé du second signal sont synchronisés et comparés,
**caractérisé en ce que**
le premier appareil de mesure (20) détermine, lors de la comparaison des signaux, la qualité et la vitesse de la transmission de signal par l'intermédiaire de la station relais à mesurer (21) en comparant le signal envoyé par l'appareil de mesure (20) et le signal reçu par la station mobile (12),
dans lequel une séparation entre l'information de commande et les données utiles se produit,
**en ce que** seules les données utiles sont transmises par l'intermédiaire des canaux de transmission (13, 14) entre la station de base (10) et la station relais (11) et entre la station relais (11) et la station mobile (12),
**en ce qu'**un fading et/ou un bruit et/ou une propagation par trajets multiples est ajouté au premier signal pour générer un premier signal modifié,
**en ce que** le premier signal modifié est envoyé en tant que troisième signal à la station relais à mesurer (21) et
**en ce que** le second signal est dérivé du troisième signal.

8. Procédé de mesure selon la revendication 7,
dans lequel un fading et/ou un bruit et/ou une propagation par trajets multiples est ajouté au signal dérivé du premier signal,
en ce que ce signal modifié est envoyé en tant que quatrième signal à l'appareil de réception et
en ce que le quatrième signal est dérivé du second signal.
